# EUROPEAN PATENT SPECIFICATION

(11) **EP 2 193 607 B1**
(45) Date of publication and mention of the grant of the patent: **28.03.2012**
(21) Application number: 08785387.5
(22) Date of filing: 06.08.2008
(51) Int. Cl.: H04B 1/713, B60R 25/10, G01S 5/00, G07C 9/00

(54) **METHOD AND SYSTEM FOR LOCATING THE SENDER OF A FREQUENCY HOPPING RADIO SIGNAL**
VERFAHREN UND SYSTEM ZUM LOKALISIEREN DES ABSENDERS EINES FREQUENZSPRUNG-FUNKSIGNALS
PROCÉDÉ ET SYSTÈME DE LOCALISATION DE L'ÉMETTEUR D'UN SIGNAL RADIO À SAUT DE FRÉQUENCE

(30) Priority: 15.08.2007 DE 102007038389
(43) Date of publication of application: 09.06.2010
(73) Proprietor: baimos technologies GmbH, 80807 München (DE)
(72) Inventor: SPANGENBERG, Philipp, Paul, 85748 Garching (DE); WEITZEL, Markus Michael, 85635 Höhenkirchen (DE)
(74) Representative: Wegner, Hans
(86) International application number: PCT/EP2008/006468
(87) International publication number: WO 2009/021664

(56) References cited:
- EP-A- 0 583 523
- WO-A-2006/015418
- WO-A-2006/096277
- DE-A1-102005 023 570
- DE-U1- 20 023 317

## Description

### 1. Technical Field

The present invention relates to a method and system for locating the sender of a frequency hopping radio signal.

### 2. The Prior Art

Wireless signal transmission techniques are nowadays used in various consumer products such as wireless computer networks, wireless telephones or garage door openers. Additionally, such techniques are also increasingly used for safety-critical functions, e.g. for the keyless unlocking of a car ("keyless entry") or the keyless start of the engine ("keyless go"). A keyless go system allows the driver of a car to start the engine via the start button without the use of a conventional key.

A combined keyless entry/go system is known from the PCT/DE 2006/001278 of applicant. To this end, such a system comprises a passive receiver in the car and an active sender integrated into the car key, which communicate via radio or optical signals. The document focuses on the security-related aspects of such a system, i.e. the secure authentication of the wireless key with the car.

In addition to security aspects, it is important to determine the exact location of the sender in the above described example. In the case of a keyless go system, it is crucial that at the time the engine starts, the sender of the signal, i.e. the sender integrated into the key, is located inside the car. Otherwise, the driver could leave the key outside the car and drive outside the key signal range. If now the engine is stopped, the driver would not be able to restart the engine, since the key is left behind at the starting point.

Furthermore, if the above described keyless entry system does not determine the exact location of the driver, the car could be easily stolen because the doors would unlock every time the driver is near the car but not actually inside the car and for example still in a different room.

In the prior art, approaches for locating the sender of a radio signal are known in the field of radio bearing. For long and medium wave signals, a so called minimum bearing with e.g. ferrit or frame antennas may be used. For VHF and microwave signals, a maximum bearing with e.g. yagi or parabolic antennas may be used.

Since wireless signal transmission technologies such as e.g. radio signals generally use a shared medium, i.e. the air, as communication medium, interferences of other signals within the same frequency range are problematic. One way of achieving robustness against such interferences known in the prior art is the use of so called "frequency hopping" protocols. To this end, the sender and the receiver change the frequency of the radio signal in very short time-intervals in accordance with a pre-defined pattern which is negotiated between the sender and the receiver, e.g. when the connection is established.

In this context, the WO 2006/015418 A1 discloses a bi-directional radio monitoring system, wherein a base unit communicates with a portable transceiver, e.g. by using a frequency hopping protocol as described above. The base unit is further able to determine a relative position of the portable transceiver.

The DE 10 2005 023 570 A1 discloses a mobile device, e.g. a mobile phone, with car key functionality. The mobile phone comprises an additional ID generating unit that may transfer identification information to a vehicle. Furthermore, the position of the mobile phone may be determined.

The WO 2006/096277 A1 discloses a passive start and entry system. The system comprises a vehicle unit and a fob, which communicate e.g. using a frequency hopping protocol. The vehicle unit sends signals serving to check for fobs within the proximity of the vehicle. The fob can then be used to unlock or start the vehicle.

The EP 0 583 523 A2 discloses a position determining apparatus comprising at least one base station and a plurality of mobile remote units, such as pagers. The base station sends signals to the mobile remote units by means of a frequency hopping protocol that serve, among others, for the determination of the position of the mobile remote units.

The DE 200 23 317 U1 discloses a locking system for vehicles that serves for triggering functions of the vehicle from a mobile phone. Communication means within the vehicle may detect whether the mobile phone is located inside or outside the vehicle.

However, the above described prior art approaches for locating the sender of a radio signal depend on the frequency of the signal as a fixed parameter. Since in a frequency hopping protocol, this frequency changes, there is no simple and reliable way of locating the sender of a radio signal by a third party known from the prior art. Additionally, since more than one sender may be within the signal range, a third party cannot reliably assign the received frequencies to the different senders.

In view of the above, it is therefore the technical problem underlying the present invention to provide a method and system for the efficient and reliable locating of the sender of a radio signal which changes the frequency of the signal according to a frequency hopping protocol and thus to at least partly overcome the disadvantages of the prior art.

### 3. Summary of the Invention

This problem is in one embodiment of the invention solved by a method for locating the sender of a radio signal in accordance with claim 1.

Accordingly, the embodiment defines a way of locating the sender of a radio signal which uses a frequency hopping protocol. To this end, the sender of a radio signal changes the frequency of the signal in very short time-intervals according to a pre-defined pattern. This pattern is preferably negotiated between the sender and the receiver when the connection is established, so that the receiver of the signal can adapt its receiving frequency accordingly. The locating of the sender is achieved in that a localization module receives the radio signal via one or more localization receivers and locates the sender based on this signal. The fact that the localization module changes the receiving frequency of the one or more localization receivers according to the frequency pattern allows to determine which is the current frequency of the signal.

In another aspect of the invention, step c. comprises forwarding the pre-defined frequency pattern from the at least one receiver and/or from the sender to the localization module. This allows the localization module to adapt the receiving frequency of the localization receivers according to the frequency pattern. The forwarding may be e.g. achieved by sending the whole frequency pattern to the localization module once it is negotiated between the sender and the at least one receiver, or e.g. by sending each frequency on its own every time it changes.

Once the frequency pattern is known, the localization module may now reliably assign the received signals to the sender and locate the sender. In one aspect of the invention, the locating of the sender in step b. is based on the position of the one or more localization receivers and at least one of the group of information comprising the signal strength of the radio signal received by the one or more localization receivers, a signal delay of the radio signal received by the one or more localization receivers and/or radio relay characteristics. It should be appreciated that the position information of the one or more localization receivers may comprise their absolute or their relative position. The locating of the sender is further explained in the detailed description below.

In another aspect of the invention, the one or more localization receivers serve as the at least one receiver of the signal. In this case, one or more of the localization receivers also perform the functions of a receiver, i.e. they further process the radio signal.

In yet another aspect of the invention, the sender may be a mobile device such as e.g. a cell phone or a PDA.

Furthermore, the radio signal may be a Bluetooth signal. Bluetooth is an industry standard defined in IEEE 802.15.1 for the wireless communication of devices over a short distance. The sender of a Bluetooth signal selects a different frequency among 79 frequency steps up to 1,600 times per second. Bluetooth technology is nowadays available in most modem mobile devices such as laptops, mobile phones or PDAs, which makes it an interesting technology for application areas explained in the detailed description below. A characteristic in the context of Bluetooth signals is the shortness of the frequency stability. Since a Bluetooth sender changes its frequency up to 1,600 times per second, no reliable locating technique is known from the prior art.

In a preferred embodiment of the present invention, the radio signal triggers functions of a car such as the keyless unlocking of the doors of a car if the sender of the radio signal determined in step b. is in a pre-defined location relative to the car. Accordingly, this allows the driver of a car to unlock the car without the use of a conventional key. If the sender is e.g. a Bluetooth sender integrated into a mobile device such as a PDA or cell phone, a particularly comfortable access to the car is made possible, since the driver only needs his mobile device to enter the car.

Alternatively or additionally, the radio signal enables the keyless starting of the engine of a car if the location of the sender of the radio signal determined in step b. is within the car. Since most modem automobiles have a start button in addition to the conventional keyhole, the starting of the engine could be enabled as soon as the sender, preferably integrated into the cell phone of the driver, is within the car, so that the engine could be started by simply pressing the start button without the use of a conventional key. In this embodiment, it is of particular importance that the sender is within the car at the time the engine starts, as already explained in the introductory section above.

It should be appreciated that also combined entry/go systems as well as the triggering of further functions of a car are possible, e.g. the automatic adaptation of the car interior to settings defined only once by a user. Further examples are explained in the detailed description below.

The present invention is also directed to a computer program comprising instructions for implementing the above aspects.

According to a further aspect of the present invention, a system for locating the sender of a radio signal is provided in accordance with claim 9.

Further advantageous modifications of embodiments of the method and the system of the invention are defined in further dependent claims.

### 4. Short Description of the Drawings

In the following detailed description, presently preferred embodiments of the invention are further described with reference to the following figures:
- Fig. 1:: A schematic view of a sender and a receiver communicating over a radio signal;
- Fig. 2:: A schematic view of the scenario of Fig. 1 with a localization module and three localization receivers;
- Fig. 3:: A schematic view of the 3-dimensional distribution of three localization receivers;
- Fig. 4:: An example of frequency patterns of three exemplary localization receivers;

### 5. Detailed Description

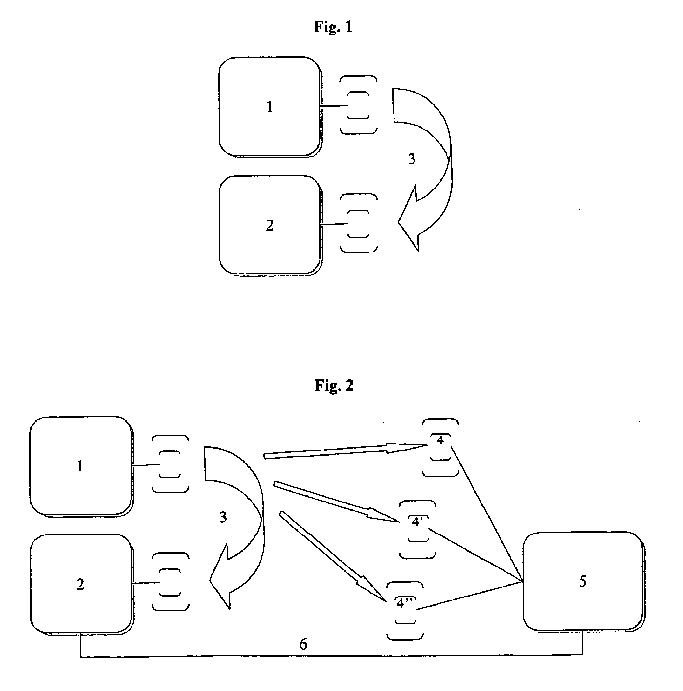

In the following, a presently preferred embodiment of the invention is described with respect to the scenario depicted in Fig. 1. Fig. 1 shows a sender 1 sending a radio signal 3 to a receiver 2. It should be appreciated that the depicted scenario is only one of a wide variety of scenarios and that there might be more than one receiver 2 of the radio signal 3. Also, one or more other senders (not depicted in Fig. 1) might be in the signal range of the radio signal 3, sending other radio signals. In the following, the terms sender and receiver are used to describe modules which are adapted for sending and receiving electromagnetic waves. A sender may e.g. comprise an oscillator, an amplifier and a transmitting antenna as well as a module for the modulation of the oscillation. A receiver may e.g. comprise an antenna, a detector as well as a module for the demodulation of the oscillation.

During the transmission of the radio signal 3, the sender 1 changes the frequency of the radio signal 3 in a defined way (frequency hopping). The receiver 2 knows this definition and changes its receiving frequency in a way so that it may receive the radio signal 3. However, locating the sender 1 in the above scenario cannot be achieved in a straight forward way.

The prior art approaches for locating the sender 1 of a radio signal 3 rely on the frequency of the signal 3 as a fixed parameter. As already described above, a sender 1 using frequency hopping does not use a fixed frequency for the radio signal 3, but different frequencies from a frequency spectrum. This frequency spectrum is shared among all possible senders within the signal range. Additionally, the specific frequency pattern used for the transmission of the radio signal 3 is preferably only known to the sender 1 and the receiver 2.

In case only sender 1 is within the signal range, a third party could simply analyze the whole frequency spectrum in order to locate the sender 1. Measurement equipment for this approach is already known from the prior art, however, this approach is unreliable due to signal perturbations. Additionally, if the sender 1 and the receiver 2 use a bidirectional communication as explained in more detail below, it may well be the case that in a certain point in time the receiver 2 uses a frequency formerly used by the sender 1, so that a third party would suddenly locate the receiver 2 instead of the sender 1. Furthermore, the measurement equipment known from the prior art is designed for the use under laboratory conditions and not suitable for the use e.g. in mobile consumer devices.

In the more likely case that one or more other senders are within the signal range, a third party would receive the radio signals from all the senders. A reliable assignment of the radio signals to the different senders is not possible with the prior art approaches due to the frequency hopping and the shared frequency spectrum, respectively.

Furthermore, a locating of the sender of a radio signal takes a certain time in the prior art approaches due to the bearing of radio signals. Once a third party has successfully tracked the current frequency of the radio signal, the frequency may already have changed due to the frequency hopping, so that the tracking would lack behind the current frequency.

Fig. 2 shows a preferred embodiment of the present invention. In addition to the scenario of Fig. 1, Fig. 2 shows a localization module 5, which is connected to the receiver 2 over a synchronization connection 6. The synchronization connection 6 serves for forwarding the frequency pattern of the radio signal 3 to the localization module 5. This may be achieved e.g. by forwarding the definition of the frequency pattern which was negotiated between the sender 1 and the receiver 2 of the radio signal 3. It should however be appreciated that other ways are also possible, such as e.g. the forwarding of the current frequency of the radio signal 3 each time the frequency changes.

In the following, the sending of data via the radio signal 3 from the sender 1 to the receiver 2 takes place on the lower protocol levels of such a radio transmission. Technically, the transmission of data may be performed on higher levels by a multitude of bidirectional signals between the sender 1 and the receiver 2, because the unidirectional transmission of the reference data may be secured by a bidirectional base protocol. To this end, the receiver 2 sends control data back to the sender 1 which allows for determining the integrity of the reference data, i.e. the receiver 2 acts as a sender 1. Therefore, the synchronization connection 6 may also connect the localization module 5 to the sender 1 of a radio signal (not depicted in Fig. 2). It should be appreciated that other scenarios are also possible, e.g. a connection of the localization module 5 with both the sender 1 and the receiver 2.

The exemplary localization module 5 in Fig. 2 further comprises three localization receivers 4, 4', 4". Due to the synchronization connection 6, the localization module 5 may adapt the receiving frequency of the localization receivers 4, 4', 4" according to the frequency pattern of the radio signal 3. This enables an exact and reliable locating of the sender 1. As described below, three localization receivers allow for a 3-dimensional locating of the sender 1. However, it should be appreciated that other setups are also possible, e.g. only two localization receivers and a receiver 2 which also acts as a localization receiver. Additionally, if only the distance of the sender 1 is to be determined, only one or two localization receivers may be sufficient.

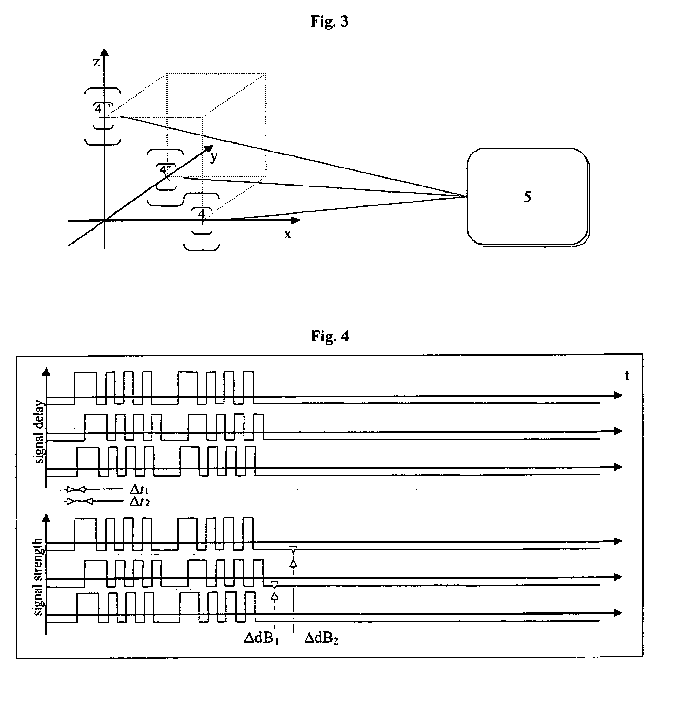

The localization receivers 4, 4', 4" are located in defined positions within the signal range. A possible measurement setup is depicted in Fig. 3. It shows the localization receiver 4 with coordinates (1,0,0), the localization receiver 4' with coordinates (0,1,0) and the localization receiver 4" with coordinates (0,0,1). Because of the 3-dimensional distribution, the characteristics of the radio signal 3 slightly differ at the localization receivers 4, 4', 4", e.g. in the signal strength or the temporal offset, i.e. delay in the time of arrival of the signal 3 at the different localization receivers 4, 4', 4".

Fig. 4 shows an example of the temporal sequence of the signal 3 received by the three localization receivers 4, 4', 4". The upper diagram in Fig. 4 shows how the signal 3 arrives at the localization receivers 4, 4', 4" with different delays (*Δt₁* and *Δt₂*). The lower diagram shows how the signal 3 has different signal strengths (*ΔdB₁* and *ΔdB₂*) at the localization receivers 4, 4', 4".

Accordingly, the localization module 5 may compute the location of the sender 1, i.e. the position of the sender 1 relative to the localization receivers 4, 4', 4", from the signal strengths (see Fig. 4, lower diagram) of the signal 3 received at the localization receivers 4, 4', 4" and their position. This may be achieved by drawing an imaginary circle around each localization receiver 4, 4', 4" with a radius corresponding to the signal strength. The intersection point of the circles then determines the location of the sender 1.

Alternatively, the localization module 5 may compute the location of the sender 1 from the signal delays of the signal received at the localization receivers 4, 4', 4" and their position. The signal delays are depicted in the upper diagram of Fig. 4 and result from the different distances between each localization receiver 4, 4', 4" and the sender 1. Based on the different signal delays, an imaginary circle may be drawn around each localization receiver 4, 4', 4", wherein the intersection point of the circles determines the location of the sender 1.

Another way of computing the location of the sender 1 is the use of radio relay characteristics, e.g. the above described maximum bearing with e.g. yagi or parabolic antennas may be used to scan for the maximum signal strength.

The accuracy of the measurement of the signal 3 is proportional to the distance between the localization receivers 4, 4', 4" because the radio signal 3 propagates constantly at the speed of light. Since the maximum distance between the localization receivers 4, 4', 4" is limited in certain application areas, e.g. in a car, a combination of the above described techniques may improve the overall accuracy of the measurement.

Additionally, by repeating the measurement e.g. in fixed time intervals, it is possible to determine a movement, a movement direction and/or an acceleration of the sender 1.

The above described method and system allows for the exact and reliable locating of the sender 1 of a radio signal 3 using frequency hopping in various application areas. The following examples describe a selection of some advantageous application areas. However, it should be appreciated that the described examples are only a few of a wide variety of possible usage scenarios of the advantageous concepts of the present invention.

A specifically advantageous application area is a Bluetooth-based system for the usage of mobile devices such as cell phones, smart phones or PDAs as digital keys for any kind of valuable objects, e.g. vehicles, facilities or other technical systems. The present invention is particularly beneficial when the mobile Bluetooth-device used as digital key has to be exactly located. Such a system can therefore serve as the basic technology in at least the following application areas:

### Application Area Automotive

Modem cars have an increasing variety of comfort functions such as the above described keyless entry and keyless go systems. Such functions are usually triggered by a radio or optical sender integrated into the conventional car key. With the claimed method and system of the present application, it is possible to trigger such functions e.g. from a cell phone or other mobile devices with Bluetooth functionality.

E.g. the Bluetooth signal of a mobile device may trigger the keyless unlocking of the doors of a car if the cell phone is in a pre-defined location relative to the car, i.e. the driver approaches the car. Accordingly, this allows the driver of a car to unlock the car without the physical use of the key.

Furthermore, the mobile device may enable the keyless starting of the engine of a car by simply pressing the start button of the car without the use of a conventional key, as long as the driver carries his/her cell phone. However, as already explained in the introductory section above, in this scenario it is crucial that the mobile device is within the car at the time the engine starts.

It should be appreciated that also combined entry/go systems as well as the triggering of further functions of a car, such as the automatic closing of the windows when the driver (with the mobile device) leaves the car or the remote starting of the auxiliary heating system of the car, are possible.

A further example of an advantageous function is the determination which mobile device is currently communicating with the handsfree set of the car (which passenger or the driver) in order to employ the correct user profile or trigger an automatic emergency-call in case of an accident.

Generally, the locating of a mobile device enables the triggering of a function only from a certain position, e.g. the opening and closing of a convertible top of a car must only be initiated if the driver is in direct intervisibility with the car.

### Application Area Facility Access Management

The above described door unlocking functionality is also interesting for the access management of facilities such as office buildings or private homes. Accordingly, an automatic opening and closing of doors in the near distance would be possible with the present invention. While prior art approaches for the determination of a general near distance (e.g. "sender within approximately 5-100 meters") is insufficient for the described scenario, the present invention allows for the determination of a more defined near distance (e.g. "sender is exactly 10 meters away and located at 270°").

Another advantageous function would be the locating of a mobile device for the access through a single entry system such as a turnstile, e.g. in subway stations. The contactless use of mobile devices in such systems requires the exact locating of the mobile device in order to check the access rights of the person requesting access.

Further examples are that the automatic opening of a barrier of a parking lot must only be initiated from the first vehicle and closed again right behind the vehicle. This avoids situations where a second vehicle without access rights could follow the first vehicle, or the second vehicle could open the barrier for the (unauthorized) first vehicle.

Furthermore, an alarm system of a building must only be armed when a person with a mobile device triggering the alarm system leaves the building and should be disarmed when the person enters the building, in case the mobile device has the correct access rights.

### Application Area Consumer Electronics

Further advantageous employments of the present invention are possible in the field of consumer electronics, e.g. for the locating of nearby personal devices such as cell phones, PDAs, etc., or for the steering of game consoles e.g. for the positioning of a tennis racket in a tennis console game.

Generally, the trend in consumer electronics goes towards the integration of more and more functions into a single device, e.g. most modem cell phones nowadays comprise a digital camera or even an mp3-player. Since most modem cell phones also provide Bluetooth functionality, the present invention enables the integration of even more advantageous functions into cell phones and other mobile devices. The above described examples only show a small number of possibilities.

## Claims

1. A method for locating the sender (1) of a radio signal (3), the radio signal (3) being received by at least one receiver (2), the sender (1) changing the frequency of the radio signal (3) according to a pre-defined frequency pattern, the at least one receiver (2) changing its receiving frequency according to the pre-defined frequency pattern, the method being **characterized by** the following steps:
a. receiving the radio signal (3) by a localization module (5) via one or more localization receivers (4, 4', 4"), the localization module (5) being arranged separately from the sender (1) and the at least one receiver (2); and
b. locating, by the localization module (5), the sender (1) of the radio signal (3); wherein
c. the localization module (5) changes the receiving frequency of the one or more localization receivers (4, 4', 4") according to the pre-defined frequency pattern; and
d. wherein the pre-defined frequency pattern is only known to the sender (1) and the at least one receiver (2) and step c. comprises forwarding the pre-defined frequency pattern from the at least one receiver (2) and/or from the sender (1) to the localization module (5) over a synchronization connection (6) between the localization module (5) and the at least one receiver (2) and/or between the localization module (5) and the sender (1).

2. The method of claim 1, wherein the locating of the sender (1) in step b. is based on the position of the one or more localization receivers (4, 4', 4") and at least one of the group of information comprising the signal strength of the radio signal (3) received by the one or more localization receivers (4, 4', 4"), a signal delay of the radio signal (3) received by the one or more localization receivers (4, 4', 4") and/or radio relay characteristics.

3. The method of any of the preceding claims, wherein the one or more localization receivers (4, 4', 4") serve as the at least one receiver (2) of the radio signal (3).

4. The method of any of the preceding claims, wherein the sender (1) is a mobile device such as e.g. a cell phone or a PDA.

5. The method of any of the preceding claims, wherein the radio signal (3) is a Bluetooth signal.

6. The method of any of the preceding claims, wherein the radio signal (3) triggers the keyless unlocking of the doors of a car if the sender (1) of the radio signal (3) determined in step b. is in a pre-defined location relative to the car.

7. The method of any of the preceding claims, wherein the radio signal (3) enables the keyless starting of the engine of a car if the location of the sender (1) of the radio signal (3) determined in step b. is within the car.

8. A computer program comprising instructions for implementing any of the preceding method claims 1 - 7.

9. A system for locating the sender (1) of a radio signal (3), the radio signal (3) being received by at least one receiver (2), the sender (1) being adapted for changing the frequency of the signal (3) according to a pre-defined frequency pattern, the at least one receiver (2) being adapted for changing its receiving frequency according to the pre-defined frequency pattern, the system being **characterized in that** it comprises:
a localization module (5) adapted for receiving the radio signal (3) via one or more localization receivers (4, 4', 4"), the localization module (5) being arranged separately from the sender (1) and the at least one receiver (2), wherein the localization module (5) is adapted for locating the sender (1) of the radio signal (3) and for changing the receiving frequency of the one or more localization receivers (4, 4', 4") according to the pre-defined frequency pattern, wherein the pre-defined frequency pattern is only known to the sender (1) and the at least one receiver (2) and wherein the system further comprises a synchronization connection (6) between the localization module (5) and the at least one receiver (2) and/or between the localization module (5) and the sender (1), the synchronization connection (6) being adapted for forwarding the pre-defined frequency pattern from the at least one receiver (2) and/or from the sender (1) to the localization module (5).

10. The system of claim 9, wherein the localization module (5) is adapted for locating the sender (1) based on the position of the one or more localization receivers (4, 4', 4") and at least one of the group of information comprising the signal strength of the radio signal (3) received by the one or more localization receivers (4, 4', 4"), a signal delay of the radio signal (3) received by the one or more localization receivers (4, 4', 4") and/or radio relay characteristics.

11. The system of any of the preceding claims 9 or 10, wherein the one or more localization receivers (4, 4', 4") are adapted for serving as the at least one receiver (2) of the signal (3).

12. The system of any of the preceding claims 9 - 11, wherein the sender (1) is a mobile device such as e.g. a cell phone or a PDA.

13. The system of any of the preceding claims 9 - 12, wherein the radio signal (3) is a Bluetooth signal.

## Patentansprüche

1. Ein Verfahren zum Lokalisieren des Senders (1) eines Funksignals (3), wobei das Funksignal (3) durch zumindest einen Empfänger (2) empfangen wird, wobei der Sender (1) die Frequenz des Funksignals (3) gemäß einem vordefinierten Frequenzmuster ändert, wobei der zumindest eine Empfänger (2) seine Empfangsfrequenz gemäß dem vordefinierten Frequenzmuster ändert, wobei das Verfahren durch die folgenden Schritte gekennzeichnet ist:
a. Empfangen des Funksignals (3) durch ein Lokalisierungsmodul (5) über einen oder mehrere Lokalisierungsempfänger (4, 4', 4"), wobei das Lokalisierungsmodul (5) separat von dem Sender (1) und dem zumindest einen Empfänger (2) angeordnet ist; und
b. Lokalisieren des Senders (1) des Funksignals (3) durch das Lokalisierungsmodul (5); wobei
c. das Lokalisierungsmodul (5) die Empfangsfrequenz des einen oder der mehreren Lokalisierungsempfänger (4, 4', 4") gemäß dem vordefinierten Frequenzmuster ändert; und
d. wobei das vordefinierte Frequenzmuster nur dem Sender (1) und dem zumindest einen Empfänger (2) bekannt ist und Schritt c. ein Weiterleiten des vordefinierten Frequenzmusters von dem zumindest einen Empfänger (2) und/oder von dem Sender (1) zu dem Lokalisierungsmodul (5) über eine Synchronisierungsverbindung (6) zwischen dem Lokalisierungsmodul (5) und dem zumindest einen Empfänger (2) und/oder zwischen dem Lokalisierungsmodul (5) und dem Sender (1) aufweist.

2. Das Verfahren nach Anspruch 1, wobei das Lokalisieren des Senders (1) in Schritt b. auf der Position des einen oder der mehreren Lokalisierungsempfänger (4, 4', 4") basiert und auf zumindest einer aus der Gruppe von Informationen, aufweisend die Signalstärke des Funksignals (3), das durch den einen oder die mehreren Lokalisierungsempfänger (4, 4', 4") empfangen wird, eine Signalverzögerung des Funksignals (3), das durch den einen oder die mehreren Lokalisierungsempfänger (4, 4', 4") empfangen wird und/oder Richtfunkcharakteristiken.

3. Das Verfahren nach einem der vorangehenden Ansprüche, wobei der eine oder die mehreren Lokalisierungsempfänger (4, 4', 4") als der zumindest eine Empfänger (2) des Funksignals (3) dient/dienen.

4. Das Verfahren nach einem der vorangehenden Ansprüche, wobei der Sender (1) ein mobiles Gerät wie zum Beispiel ein Mobiltelefon oder ein PDA ist.

5. Das Verfahren nach einem der vorangehenden Ansprüche, wobei das Funksignal (3) ein Bluetooth-Signal ist.

6. Das Verfahren nach einem der vorangehenden Ansprüche, wobei das Funksignal (3) das schlüssellose Aufsperren der Türen eines Autos anstößt, falls der in Schritt b. festgestellte Sender (1) des Funksignals (3) sich an einem vordefinierten Ort relativ zu dem Auto befindet.

7. Das Verfahren nach einem der vorangehenden Ansprüche, wobei das Funksignal (3) das schlüssellose Starten des Motors eines Autos ermöglicht, falls der Ort des in Schritt b. festgestellten Senders (1) des Funksignals (3) innerhalb des Autos liegt.

8. Ein Computerprogramm, aufweisend Instruktionen zum Implementieren eines der vorangehenden Verfahrensansprüche 1 -7.

9. Ein System zum Lokalisieren des Senders (1) eines Funksignals (3), wobei das Funksignal (3) durch zumindest einen Empfänger (2) empfangen wird, wobei der Sender (1) angepasst ist, um die Frequenz des Signals (3) gemäß einem vordefinierten Frequenzmuster zu ändert, wobei der zumindest eine Empfänger (2) angepasst ist, um seine Empfangsfrequenz gemäß dem vordefinierten Frequenzmuster zu ändern, wobei das System **dadurch gekennzeichnet ist, dass** es aufweist:
ein Lokalisierungsmodul (5), angepasst zum Empfangen des Funksignals (3) über einen oder mehrere Lokalisierungsempfänger (4, 4', 4"), wobei das Lokalisierungsmodul (5) separat von dem Sender (1) und dem zumindest einen Empfänger (2) angeordnet ist, wobei das Lokalisierungsmodul (5) angepasst ist zum Lokalisieren des Senders (1) des Funksignals (3) und zum Ändern der Empfangsfrequenz des einen oder der mehreren Lokalisierungsempfänger (4, 4', 4") gemäß dem vordefinierten Frequenzmuster, wobei das vordefinierte Frequenzmuster nur dem Sender (1) und dem zumindest einen Empfänger (2) bekannt ist und wobei das System ferner eine Synchronisierungsverbindung (6) zwischen dem Lokalisierungsmodul (5) und dem zumindest einen Empfänger (2) und/oder zwischen dem Lokalisierungsmodul (5) und dem Sender (1) aufweist, wobei die Synchronisierungsverbindung (6) angepasst ist zum Weiterleiten des vordefinierten Frequenzmusters von dem zumindest einen Empfänger (2) und/oder von dem Sender (1) zu dem Lokalisierungsmodul (5).

10. Das System nach Anspruch 9, wobei das Lokalisierungsmodul (5) angepasst ist zum Lokalisieren des Senders (1) basierend auf der Position des einen oder der mehreren Lokalisierungsempfänger (4, 4', 4") und zumindest einer aus der Gruppe von Informationen, aufweisend die Signalstärke des Funksignals (3), das durch den einen oder die mehreren Lokalisierungsempfänger (4, 4', 4") empfangen wird, eine Signalverzögerung des Funksignals (3), das durch den einen oder die mehreren Lokalisierungsempfänger (4, 4', 4") empfangen wird und/oder Richtfunkcharakteristiken.

11. Das System nach einem der vorangehenden Ansprüche 9 oder 10, wobei der eine oder die mehreren Lokalisierungsempfänger (4, 4', 4") angepasst sind, um als der zumindest eine Empfänger (2) des Signals (3) zu dienen.

12. Das System nach einem der vorangehenden Ansprüche 9-11, wobei der Sender (1) ein mobiles Gerät wie zum Beispiel ein Mobiltelefon oder ein PDA ist.

13. Das System nach einem der vorangehenden Ansprüche 9 - 12, wobei das Funksignal (3) ein Bluetooth-Signal ist.

## Revendications

1. Un procédé pour localiser l'émetteur (1) d'un signal radio (3), le signal radio (3) étant reçu par au moins un récepteur (2), l'émetteur (1) modifiant la fréquence du signal radio (3) en fonction d'un motif de fréquences prédéfini, le au moins un récepteur (2) modifiant sa fréquence de réception en fonction du motif de fréquences prédéfini, le procédé étant **caractérisé par** les étapes suivantes :
a. réception du signal radio (3) par un module de localisation (5) via un ou plusieurs récepteurs de localisation (4, 4', 4"), le module de localisation (5) étant configuré séparément de l'émetteur (1) et du au moins un récepteur (2) ; et
b. la localisation, par le module de localisation (5), de l'émetteur (1) du signal radio (3) ; dans lequel
c. le module de localisation (5) modifie la fréquence de réception du un ou plusieurs récepteurs de localisation (4, 4', 4") en fonction du motif de fréquences prédéfini ; et
d. dans lequel le motif de fréquences prédéfini est connu seulement de l'émetteur (1) et du au moins un récepteur (2) et l'étape c. comprend l'envoi du motif de fréquences prédéfini depuis le au moins un récepteur (2) et/ou depuis l'émetteur (1) vers le module de localisation (5) sur une liaison de synchronisation (6) entre le module de localisation (5) et le au moins un récepteur (2) et/ou entre le module de localisation (5) et l'émetteur (1).

2. Le procédé de la revendication 1, dans lequel la localisation de l'émetteur (1) à l'étape b. est fonction de la position des un ou plusieurs récepteurs de localisation (4, 4', 4") et d'au moins l'une du groupe d'informations comprenant la force du signal radio (3) reçu par les un ou plusieurs récepteurs de localisation (4, 4', 4"), un retard de signal du signal radio (3) reçu par les un ou plusieurs récepteurs de localisation (4, 4', 4") et/ou des caractéristiques de relai radio.

3. Le procédé de l'une des revendications précédentes, dans lequel les un ou plusieurs récepteurs de localisation (4, 4', 4") jouent le rôle du au moins un récepteur (2) du signal radio (3).

4. Le procédé de l'une des revendications précédentes, dans lequel l'émetteur (1) est un dispositif mobile tel que par exemple un téléphone portable ou un assistant numérique personnel.

5. Le procédé de l'une des revendications précédentes, dans lequel le signal radio (3) est un signal Bluetooth.

6. Le procédé de l'une des revendications précédentes, dans lequel le signal radio (3) déclenche le déverrouillage sans clef des portes d'une voiture si l'émetteur (1) du signal radio (3) déterminé à l'étape b. se situe en un emplacement prédéfini par rapport à la voiture.

7. Le procédé de l'une des revendications précédentes, dans lequel le signal radio (3) active le démarrage sans clef du moteur d'une voiture si l'emplacement de l'émetteur (1) du signal radio (3) déterminé à l'étape b. se trouve à l'intérieur de la voiture.

8. Un programme informatique comprenant des instructions pour mettre en oeuvre l'une des revendications précédentes de procédé 1 à 7.

9. Un système pour localiser l'émetteur (1) d'un signal radio (3), le signal radio (3) étant reçu par au moins un récepteur (2), l'émetteur (1) étant apte à modifier la fréquence du signal (3) en fonction d'un motif de fréquences prédéfini, le au moins un récepteur (2) étant apte à modifier sa fréquence de réception en fonction du motif de fréquences prédéfini, le système étant **caractérisé en ce qu'**il comprend :
un module de localisation (5) apte à recevoir le signal radio (3) via un ou plusieurs récepteurs de localisation (4, 4', 4"), le module de localisation (5) étant configuré séparément de l'émetteur (1) et du au moins un récepteur (2), le motif de fréquence prédéfini étant connu seulement de l'émetteur (1) et du au moins un récepteur (2) et le système comprenant en outre une liaison de synchronisation (6) entre le module de localisation (5) et le au moins un récepteur (2) et/ou entre le module de localisation (5) et l'émetteur (1), la liaison de synchronisation (6) étant apte à transférer le motif de fréquences prédéfini du au moins un récepteur (2) et/ou de l'émetteur (1) vers le module de localisation (5).

10. Le système de la revendication 9, dans lequel le module de localisation (5) est apte à localiser l'émetteur (1) en fonction de la position des un ou plusieurs récepteurs de localisation (4, 4', 4") et d'au moins l'une d'un groupe d'informations comprenant la force de signal du signal radio (3) reçu par les un ou plusieurs récepteurs de localisation (4, 4', 4"), un retard de signal du signal radio (3) reçu par les un ou plusieurs récepteurs de localisation (4, 4', 4") et/ou des caractéristiques de relais radio.

11. Le système de l'une des revendications précédentes 9 ou 10, dans lequel les un ou plusieurs récepteurs de localisation (4, 4', 4") sont aptes à jouer le rôle du au moins un récepteur (2) du signal (3).

12. Le système de l'une des revendications précédentes 9 à 11, dans lequel l'émetteur est un dispositif mobile tel que par exemple un téléphone portable ou un assistant numérique personnel.

13. Le système de l'une des revendications précédentes 9 à 12, dans lequel le signal radio est un signal Bluetooth.
